# EUROPEAN PATENT SPECIFICATION

(11) **EP 1 439 720 B1**
(45) Date of publication and mention of the grant of the patent: **02.09.2015**
(21) Application number: 04300013.2
(22) Date of filing: 08.01.2004
(51) Int. Cl.: H04N 17/04

(54) **Method for testing an appliance comprising an audio port, and a respective appliance**
Verfahren und Vorrichtung zur Prüfung eines Geräts mit einem Audioanschluss
Méthode et dispositif pour tester un appareil comprenant un port audio

(30) Priority: 20.01.2003 EP 03290132
(43) Date of publication of application: 21.07.2004
(73) Proprietor: Thomson Licensing, 92130 Issy-les-Moulineaux (FR)
(72) Inventor: Will, Patrick, 35700 Rennes (FR); Horr, Olivier, 35000 Rennes (FR)
(74) Representative: Arnold, Klaus-Peter

(56) References cited:
- EP-A1- 1 382 973
- PATENT ABSTRACTS OF JAPAN vol. 2002, no. 03, 3 April 2002 (2002-04-03) & JP 2001 320741 A (FUJI PHOTO FILM CO LTD), 16 November 2001 (2001-11-16)
- PATENT ABSTRACTS OF JAPAN vol. 2000, no. 13, 5 February 2001 (2001-02-05) & JP 2000 295499 A (MITSUBISHI ELECTRIC CORP), 20 October 2000 (2000-10-20)

## Description

The invention relates to an appliance comprising an audio port and a method for testing of the appliance. It relates in particular to a set-top box or a digital satellite receiver with two audio ports for a stereo output signal.

Set-top boxes and digital satellite receivers are widely used for reception of digital television cable programs or satellite programs and operate usually with a smart card to allow also a decoding of scrambled pay television channels. Smart cards, also known as IC cards, are portable information media, having the size of about a credit card. In this description, the expression set-top box will be used for describing an appliance for receiving digital and/or analogue television programs via cable, satellite, or via terrestrial reception.

Set-top boxes are complex digital appliances, which need extensive testing during production and also occasionally servicing after sales due to its highly integrated digital architecture. It is known to provide a digital set-top box with a so-called FFT interface for allowing factory functional tests (FFT). This is a tool, which gives the capability to drive the set-top box hardware through its low level drivers by using an external computer, for example a PC. The computer is coupled via a standard RS232 serial connection to the set-top box, which comprises a respective port for example on the rear panel. This tool allows easy access during the factory process, especially for the consumer test after production of the appliance, when the box is closed. It is also very useful for after sales diagnostics or development tests too.

The size of the set-top boxes is shrinking more and more as the level of integration in the integrated circuits increases. But especially so-called SCART connectors, being used widely in Europe, consume a considerable amount on the rear panel, and the smaller the set-top boxes are, the fewer places are available for connectors. For the basic operations of a set-top box at least video and audio connectors have to be provided, with an audio reproduction usually in stereo, and respective connectors have to be provided on the rear panel of the set-top box, either in the form of individual connectors, in a unique connector having several pins each one dedicated to a specific signal, or in a combination of individual and mixed connectors.

In the earlier European application 022918329.0 (published under EP-A-1382973) a method for testing of an appliance is disclosed, which uses a test adapter being introduced into a smart card reader of the appliance for testing of the appliance. This allows to avoid the RS232 interface, but it is not possible to test the normal operation of the appliance with a smart card, when using this test procedure. For the testing of all functions of a set-top box, the computer link must not be exclusive with any other standard function being provided by the set-top box.

JP 2001/320741 discloses an electronic camera comprising an interface connector for a video signal output, which can be used in addition as a communication port for adjustment of a set of the electronic camera. The interface connector acts as a common connector for the transmission of voice and images and for a reception of adjustment information by including a switching means to switch between the transmission path of the adjustment information and the audio and image output means.

JP 2000/295499 discloses a camera system comprising a camera apparatus and a camera controller being connected by a coaxial cable, wherein a camera control signal and an external control signal are superimposed on the video signal of the camera.

JP 11-118513 describes a system for recording of observation data containing environmental data, wherein an environmental data signal, a geomagnetic data signal and various measurement data signals are mixed by a data mixing modulation circuit and modulated in a frequency band higher than 10 kHz, for recording on a video tape recorder.

The invention is as set out in claims 1 and 7. Preferred embodiments of the invention are described in the dependent claims.

According to the invention, existing ports of a stereo output of the appliance are used as an interface for testing of the appliance. One port of the stereo output is used for a reception of digital signals from a control computer and the other port is used for a transmission of digital signals from the appliance to the control computer. This allows a serial connection, which is compatible with the widely used RS232 link for set-top boxes.

The separation of the test signals and the audio signals is performed via a test adapter being coupled between the appliance, the control computer and an amplifier for the audio signals. Utilizing high pass and low pass filters, the audio signals and the test signals can be easily separated in the test adapter and the appliance, allowing therefore the complete functionality of the appliance, when testing the appliance. Advantageously an already existing quartz oscillator of the appliance is used for modulating digital data onto a carrier signal with a frequency of above 20 kHz, for example a frequency within the frequency range of 1 - 10 MHz.

The invention is particularly useful for testing of set-top boxes, which are often provided with the RS232 standard link, but may be used also for testing of any other digital appliances, for example video recorders and audio systems, which comprise usually also at least one audio port.

The invention is now explained by way of a preferred embodiment and with reference to schematic drawings, which show:
- Fig. 1: a test set up for testing of a set-top box,
- Fig. 2: a block diagram of an interface board and related circuit elements of a set-top box,
- Fig. 3: digital signals modulated onto a carrier signal, and
- Fig. 4: a data string of a test sequence for a set-top box.

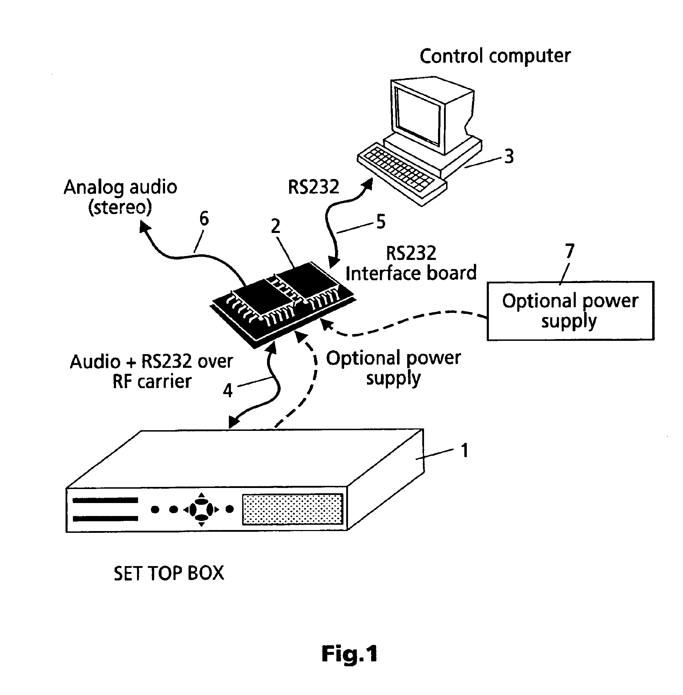

In figure 1 a test setup for a digital set-top box 1 is shown, the test setup comprising a control computer 3 and a test adapter 2 serving as an interface between the set-top box 1 and the control computer 3. The test adapter 2 consists in this embodiment essentially of an interface board, which provides a data transmission between an audio port of the set-top box 1 and the control computer 3. In this embodiment, the connection is performed via an audio cable 4 and an RS232 cable 5 for providing a serial data connection in both directions between the set-top box 1 and the control computer 3.

The test adapter 2 comprises further an analog audio output, which can be coupled via a cable 6 to an audio amplifier (not shown) for a reproduction of audio signals via loudspeakers. The test setup may comprise further a power supply 7 for providing the test adapter 2 with a supply voltage, for example 3,3 V or 5 V. As an alternative, the test adapter 2 may be powered by the set-top box 1, as explained below.

The test adapter 2 can be for example a simple circuit board comprising electrical circuits for the separation of the analog audio signals and digital test signals and comprising respective plugs for the audio cables 4 and 6 and for the RS232 cable 5. The set-top box 1 therefore does not need the up to now widely used RS232 port for the connection to the control computer 3. With a test setup as shown in figure 1, the full functionality of the set-top box 1 is provided during all of the test procedures, as before with the RS232 port on the rear panel of the set-top box.

As the audio cables 4 and 6 conventional analog audio cables are used, for example with RCA connectors, via which the audio signals of the set-top box 1 are transmitted in the low frequency range of about 20 Hz to 20 kHz. With the test adapter 2, the digital test signals from the control computer 3 are modulated onto a high frequency signal, for example onto a carrier frequency of about 1 - 10 MHz, and which is demodulated in the set-top box 1 by a demodulator. The low frequency and the high frequency signals can be easily separated in the test adapter 2 and the set-top box 1, for example with simple low pass and high pass filters. The response of the set-top box 1 to the test signals of the control computer 3 is modulated via an oscillator of the set-top box 1 onto a carrier frequency and transmitted via the audio cable 4 to the test adapter 2, demodulated in the test adapter 2 and subsequently transmitted via cable 5 and test adapter 2 to the control computer 3.

In particular, the set-top box 1 comprises two audio output ports for stereo output signals and the test adapter 2 two respective audio ports for a connection to the set-top box 1. One audio port is used for a transmission of test signals from the control computer 3 via the test adapter 2 to the set-top box 1 and the other audio port is used for a transmission of the response of the set-top box 1 to the control computer 3 via the test adapter 2.

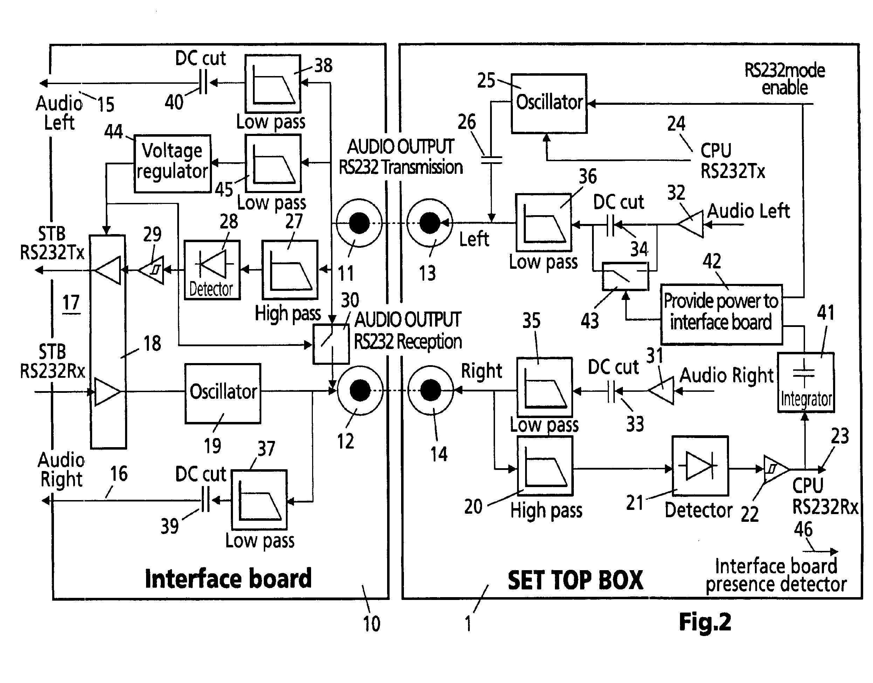

A schematic block diagram of the respective circuits of the test adapter 2 and the set-top box 1 is shown in figure 2. The test adapter 2 comprises an interface board 10, which has two audio ports 11 and 12 for a connection to left and right stereo output ports 13 and 14 of a set-top box 1 to be tested. The interface board 10 comprises further audio ports 15 and 16 for a connection to a respective amplifier and an RS232 port 17 for a serial connection to a respective control computer. Test signals from the control computer are buffered in a buffer stage 18 and then modulated onto a high frequency carrier utilizing an oscillator 19 for a transmission to the set-top box 1 via the audio ports 12 and 14.

The test signals coming from the interface board 10 are coupled via a high pass filter 20 to a detector 21, which separates and extracts the digital test signals from the high frequency carrier, followed by a discriminator and buffer stage 22. Then the test signals are coupled to a central processing unit (CPU) via a serial RS232 receive terminal 23, as known from prior art.

The response signals from the CPU are coupled via a RS232 transmit channel 24 with a high frequency signal of an oscillator 25 for modulating the digital signal onto a high frequency carrier. This signal is then coupled via a high pass filter 26 to the output port 13 of the left audio output channel of the set-top box 1 for a transmission to the audio port 11 of the interface board 10. On the interface board 10 the modulated carrier signal is separated via a high pass filter 27 from the left audio signal and demodulated via a detector 28. The output signal of the detector 28 is then transmitted via a discriminator 29, the buffer stage 18 and the RS232 port 17 to the control computer.

The audio output signals of the left and right stereo channels 31 and 32 of the set-top box 1 are coupled via DC-cut capacitors 33, 34 and low pass filters 35, 36 as DC free low frequency signals in the known audio frequency range of 20 - 20 kHz to the audio output ports 13 and 14. On the interface board 10, the audio signals are coupled via low pass filters 37, 38 and DC-cut filters 39, 40 to the audio output ports 15 and 16, for a transmission via an audio cable to an audio amplifier.

The carrier frequencies of the oscillators 19 and 25 can be provided by any quartz oscillator having for example an oscillation frequency in the range of 1 - 10 MHz, and do not need necessarily to have the same frequency. Because of the large frequency separation of the low frequency audio signals and the high frequency carrier signals, very simple low pass and high pass filters 20, 26, 27, 35, 36, 37, 38 can be used, for example simple passive resistor/capacitor (RC) filters.

The power for the active circuits of the interface board 10 can be provided for example by a separate power supply, as explained with regard to figure 1. The supply voltage may be provided also by the set-top box 1, as will be explained now with regard to figure 2.

When the set-top box 1 is switched on, the oscillator 25 is activated for checking whether an interface board 10 is connected or not. When an interface board 10 is connected, a relay 30 of the interface board 10 or any other switch, which is closed without power, couples the ports 11 and 12 together. Then there exists a closed loop between the ports 13 and 14 of the set-top box, and the detector 21 and the discriminator 22 of the set-top box 1 receive therefore an unmodulated oscillator signal of oscillator 25.

To the discriminator 22 an integrator 41 is coupled, to which a logic circuit 42 is coupled. When a carrier frequency is present at the detector 21, then the integrator 31 provides a signal to the logic circuit 32, which closes a switch 43, for providing a supply voltage to the interface board 10. In this embodiment, the switch 34 by-passes the DC-cut capacitor 34 between the audio output amplifier 32 and the low pass filter 36, for utilizing the DC level of the audio amplifier 30. This DC power can be easily handled by the amplifier 30, because the required power for the interface board 10 is very low.

The interface board 10 comprises a voltage regulator 44, which is then powered via a low pass filter 45 by the DC supply voltage coming from the set-top box 1, and the voltage regulator 44 provides then all the active circuits of the interface board 10 with the respective supply voltage. The voltage regulator 44 opens also the relay 30 for opening the loop between the audio ports 13 and 14. Then the interface board 10 is fully operational and ready for the testing of the set-top box 1.

When there is no interface board coupled to the set-top box 1, when switching on the set-top box, there is no loop between the ports 13 and 14. The set-top box then recognizes, that no interface board is connected and switches off therefore the oscillator 25 for a normal operation of the set-top box 1.

When the set-top box 1 recognizes the connection of the interface board 10 via the closed loop, the set-top box 1 goes into a test mode and waits for digital command signals provided by a control computer being connected to the interface board 10, as explained with regard to figure 1. Because the RS232 port 17 of the interface board 10 is complying with the RS232 standard, the interface board 10 is transparent for the control computer and no hardware or software of the control computer has to be changed for the testing of the set-top box 1. Because the modulated carrier signals and the audio signals are separated on the interface board as well as in the set-top box, the set-top box remains fully functional, when using the interface board 10 for the test. Also the stereo output signals of the set-top box 1 can be included in the tests, when coupling an audio amplifier to the audio output ports 15 and 16. The interface board 10 is designed to be complying with the usual set-top box specifications with regard to the audio outputs, which provide for example an output impedance between 300 Ω and 1 kΩ.

The choice of the carrier frequency of the oscillators 19 and 25 is directly related to the serial link baud rate. A ratio between the bit duration and the carrier period larger than 10 is a good basis for a reliable operation. Also, the carrier frequency should be about 20 to 50 times higher than the maximum audio frequency of the set-top box in order to guaranty an easy and low cost audio and RF carrier frequency separation in the set-top box 1 and on the interface board 10. In the set-top box 1, an already available oscillator 25 with a frequency around 4 to 5 MHz can be used for example for the modulation of the transmit digital signals coming from the CPU of the set-top box 1. The oscillator 19 of the interface board 10, which modulates the digital signals coming from the control computer onto a carrier frequency, may work in the same frequency range.

With these frequencies, a maximum baud rate of about 400 kHz can be easily handled by the interface board 10 and the set-top box 1. A typical baud rate for testing of a digital set-top box via a RS232 connection is usually not above 115,3 kilobaud.

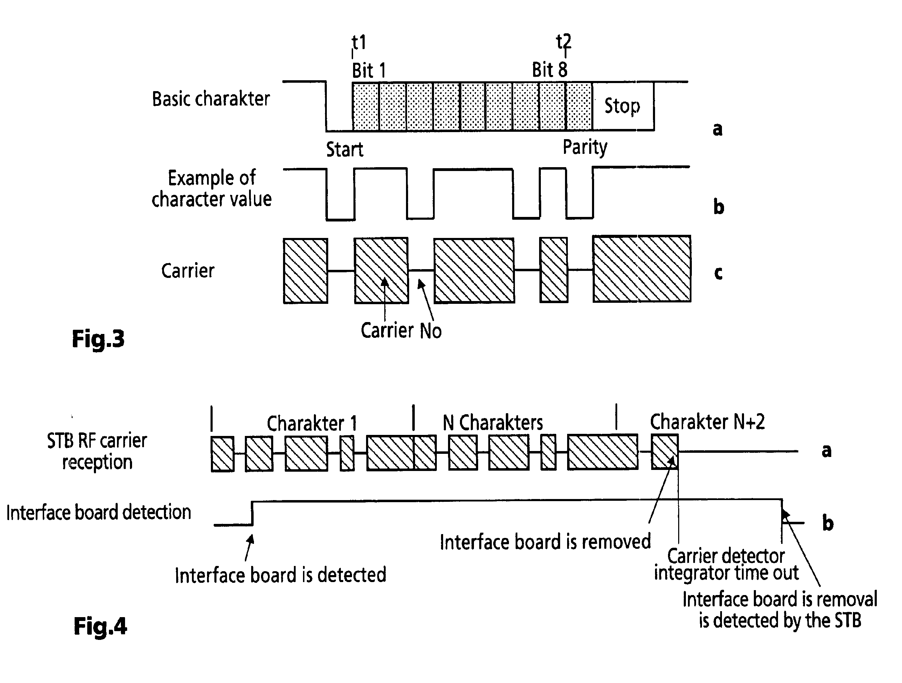

The modulation of the digital signals onto a RF carrier frequency is now explained with regard to figure 3. The carrier frequency is on/off modulated by a switch, to which the digital signals are applied. A logical value "0" is represented by RF carrier off, and a logical value "1" is represented by the RF carrier on. The test signals can be transmitted then bit by bit in data words comprising for example each 8 bit of information and a parity bit.

An example of a basic character format of this type is shown in figure 3a: If no information has to be transmitted and the transmit channel is in a wait state, the RF carrier signal is present. Then at a time t1 starts an information transmission. The modulated data word comprises a first bit, which is always "0", and then 8 data bits with values "0" or "1", respectively. At a time t2 a parity bit is transmitted providing the parity information for the data bits 1 to 8, and then a "stop" information is provided with carrier frequency on.

All bits have the same defined time length and because the time period of the carrier frequency is about one tens of the duration of one bit, a bit with value "1" comprises therefore about ten oscillation cycles of the carrier frequency. One byte of information having for example the bit sequence "11011101" leads therefore to an envelope signal for the modulator as shown in figure 3b. The resulting modulated carrier signal for the character value of figure 3b is shown in figure 3c.

Defining the level of the carrier frequency in this manner allows the set-top box 1 to constantly monitor the reception of data from the control computer during a time much longer than the transmitted bits and to decide whether the interface board was removed or not. When the carrier frequency is no longer detected via the detector 21, then the carrier frequency provided by the oscillator 25 is switched off and the set-top box returns to a normal mode of operation, in which the RS232 link is disabled.

There are several possibilities to detect the presence of a test adapter by the set-top box 1: One possibility is that the set-top box comprises a test adapter presence detector 46, as indicated in figure 2, which is always on for detecting any carrier signal being applied to the audio output 14 and to the detector 21. A further possibility is to use the carrier signal from the oscillator 25, for example after the set-top box 1 is powered on, to observe a loop between the audio ports 13 and 14, and when the loop is closed, to initialize the set-top box 1 for a test modus, in which the set-top box 1 is ready for tests in combination with a control computer.

An example for a test sequence for the set-top box 1 is explained with regard to figure 4: in figure 4a a modulated carrier signal is shown with N+2 characters 1, ... , N + 2 with a sequence of serial data bits providing test information. The carrier signal is modulated as explained with regard to figure 3.

In figure 4b the response of the set-top box 1 to the carrier signal of figure 4a is shown. When the set-top box receives a carrier signal with information characters, the set-top box assumes, that an interface board is connected to the set-top box for a testing of the set-top box. The set-top box 1 then goes into a test mode, in which the set-top box 1 responds to the information data from the control computer 3 and provides respective test results via the audio port 13 to the control computer 3. When the carrier signal is no more present or no more detected, the set-top box 1 assumes after a time out interval that the tests are finished and that the interface board 10 is removed.

The various functions needed within the set-top box for establishing the RS232 link via the audio output ports 13 and 14 can be done at very low cost. Low cost high pass and low pass R/C filters can be used comprising only a resistor and a capacitor. As the detector 21 a diode and a capacitor can be used, and for generating the carrier signal an already available oscillator 25 within the set-top box can be used. The modulator can be arranged also in a simple manner, because only an "on/off" modulation of the carrier frequency is used for the transmission of the information data. The modulation can be performed for example by a simple resistor switch, which switches the carrier signal on and off in response to the data to be transmitted. The power to the interface board 10 can be provided by the set-top box 1 also with only a few low cost elements, as explained above with regard to figure 2. As an alternative, the interface board 10 can be powered by an external power supply, as explained with regard to figure 1, when the costs of the set-top box have to be kept to a minimum.

The present invention is not limited to the embodiments as shown and described with regard to the figures, and various modifications available come possible for those skilled in the art without departing from the scope of the invention. Data transmission and reception may be arranged also via one audio port only, when using two carrier signals with frequencies, which are sufficiently different for a separation in the set-top box and the interface board. The present invention may be utilized in particular also for digital surround amplifiers, DVD players or DVD recorders, digital television sets and any other digital equipment comprising at least one audio port, in a manner similar as described above for a set-top box.

## Claims

1. Method for testing an appliance (1) comprising a stereo output port, consisting of a first (13) and a second (14) audio output port, by means of a control computer (3) when coupled to said stereo output port, the method comprising:
having a demodulator (21, 22) within the appliance coupled to the second audio output port (14) for receiving a modulated carrier signal from the control computer (3) and for demodulating the received carrier signal into serial digital signals for testing the appliance (1),
having an oscillator (25) and a modulator within the appliance coupled to the first audio output port (13) for generating a modulated carrier signal for a transmission of digital test signals via the first audio output port (13) to the control computer (3), the modulated carrier signal having a carrier frequency above 20 kHz,
upon powering on the appliance (1), outputting the modulated carrier signal of the modulator via the first audio output port (13) and detecting via a detector (21) of the demodulator (21, 22) whether said outputted carrier signal is looped back to the second audio port (14),
and upon detecting that the outputted carrier signal is looped back to the second audio port output (14), switching the appliance (1) into a test mode for an operation with the control computer (3).

2. Method according to claim 1, wherein the carrier frequency is in the frequency range of 100 kHz - 20 MHz.

3. Method according to claim 1 or 2, comprising modulating the carrier signal by the digital test signals according to an on/off switching mode.

4. Method according to claim 1, 2 or 3, comprising the step of providing a test adapter (2; 10) for testing, which comprises a first port (11, 12) for a connection to the stereo output port (13, 14) of the appliance (1), a second port (17) for a connection to the control computer (3), and an oscillator (19) for modulating digital signals from the control computer (3) onto a carrier frequency having a frequency above 20KHz.

5. Method according to one of the preceding claims, wherein if said carrier signal is not detected by the detector (21) upon said powering on, the modulated carrier signal of the modulator is switched off and the appliance goes into a normal operating mode.

6. Method according to claim 5, wherein if the outputted modulated carrier signal is detected to be looped back to the second audio output port (14) upon said powering on, the appliance (1) bypasses (43) a DC blocking capacitor (34) therein, which is coupled to said first audio output port, so as to provide a supply voltage to a test adapter (2; 10) having a first port (11, 12) consisting of third (11) and fourth (12) ports respectively connected to said first (13) and second (14) audio output ports and interconnected to loop back the outputted carrier signal, the supply voltage causing the test adapter (2; 10) to open the loop between the third and fourth ports (11, 12).

7. Appliance (1) comprising a first (13) and a second (14) audio output port for outputting a stereo signal, the appliance being operable in a test mode controlled by an external computer (3) when coupled to said appliance via said first and second audio output ports, the appliance further comprising an oscillator (25) and a modulator coupled to the first audio output port (13) for generating a modulated carrier signal for a transmission of digital test signals via the first audio port (13) to the control computer (3), the modulated carrier signal having a carrier frequency above 20 kHz,
and a demodulator (21, 22) coupled to the second audio output port (14) for receiving a modulated carrier signal from the control computer (3) and for demodulating the received modulated carrier signal into serial digital signals for testing the appliance (1),
wherein the appliance is arranged, upon powering on, to output the modulated carrier signal of the modulator via the first audio output port (13) and to detect by a detector (21) of the demodulator (21, 22) whether said outputted carrier signal is looped back to the second audio output port (14),
and wherein upon detecting that the outputted carrier signal is looped back to the second audio output port (14), the appliance is switched into a test mode for an operation with the control computer (3).

8. Appliance according to claim 7, further comprising low-pass (36) and high-pass (26) filters for combining the generated modulated carrier signals with analog audio signals for outputting via the first audio output port (13), and comprising low-pass (35) and high-pass (20) filters for separating received modulated carrier signals and outputted analog audio signals present at the second audio output port (14).

9. Appliance according to claim 7 or 8, further comprising a DC blocking capacitor (34) coupled to the first audio output port (13), and a switch (43) arranged to bypass the DC blocking capacitor when upon said powering on the modulated carrier signal is detected to be looped back to the second audio output port (14), so as to provide a supply voltage to a test adapter (2; 10) connected to said first (13) and second (14) audio output ports.

10. Appliance according to one of the claims 7 - 9, wherein the appliance is a set-top box for receiving digital and/or analogue television programs or a video recorder.

## Patentansprüche

1. Verfahren zum Prüfen eines Geräts (1), das einen Stereoausgangsanschluss umfasst, der aus einem ersten (13) und aus einem zweiten (14) Audioausgangsanschluss besteht, mittels eines Steuercomputers (3), wenn er mit dem Stereoausgangsanschluss gekoppelt ist, wobei das Verfahren umfasst:
Nehmen eines Demodulators (21, 22) innerhalb des Geräts, der mit dem zweiten Audioausgangsanschluss (14) gekoppelt ist, um von dem Steuercomputer (3) ein moduliertes Trägersignal zu empfangen und um das empfangene Trägersignal in serielle digitale Signale zum Prüfen des Geräts (1) zu demodulieren, Nehmen eines Oszillators (25) und eines Modulators innerhalb des Geräts, die mit dem ersten Audioausgangsanschluss (13) gekoppelt sind, um ein moduliertes Trägersignal für eine Sendung digitaler Prüfsignale über den ersten Audioausgangsanschluss (13) an den Steuercomputer (3) zu erzeugen, wobei das modulierte Trägersignal eine Trägerfrequenz oberhalb 20 kHz besitzt,
Ausgeben des modulierten Trägersignals des Modulators über den ersten Audioausgangsanschluss (13) und Detektieren, ob das ausgegebene Trägersignal zu dem zweiten Audioanschluss (14) zurückgeschleift wird, über einen Detektor (21) des Demodulators (21, 22), beim Einschalten des Geräts (1), und Schalten des Geräts (1) in eine Prüfbetriebsart für einen Betrieb mit dem Steuercomputer (3) beim Detektieren, dass das ausgegebene Trägersignal zu dem zweiten Audioausgangsanschluss (14) zurückgeschleift wird.

2. Verfahren nach Anspruch 1, wobei die Trägerfrequenz in dem Frequenzbereich von 100 kHz - 20 MHz liegt.

3. Verfahren nach Anspruch 1 oder 2, das das Modulieren des Trägersignals durch die digitalen Prüfsignale in Übereinstimmung mit einer Ein-/Ausschaltbetriebsart umfasst.

4. Verfahren nach Anspruch 1, 2 oder 3, das den Schritt des Bereitstellens eines Prüfadapters (2; 10) zum Prüfen umfasst, der einen ersten Anschluss (11, 12) für eine Verbindung mit dem Stereoausgangsanschluss (13, 14) des Geräts (1), einen zweiten Anschluss (17) für eine Verbindung mit dem Steuercomputer (3) und einen Oszillator (19) zum Modulieren digitaler Signale von dem Steuercomputer (3) auf eine Trägerfrequenz mit einer Frequenz oberhalb 20 kHz umfasst.

5. Verfahren nach einem der vorhergehenden Ansprüche, wobei das modulierte Trägersignal des Modulators ausgeschaltet wird und das Gerät in eine Normalbetriebsart geht, falls das Trägersignal durch den Detektor (21) beim Einschalten nicht detektiert wird.

6. Verfahren nach Anspruch 5, wobei das Gerät (1) einen Gleichstrom-Sperrkondensator (34) darin, der mit dem ersten Audioausgangsanschluss gekoppelt ist, umgeht (43), um eine Spannungsversorgung für einen Prüfadapter (2; 10) mit einem ersten Anschluss (11, 12), der aus einem dritten (11) und aus einem vierten (12) Anschluss besteht, der mit dem ersten (13) bzw. mit dem zweiten (14) Audioausgangsanschluss verbunden ist, und die miteinander verbunden sind, um das ausgegebene Trägersignal zurückzuschleifen, bereitzustellen, falls detektiert wird, dass das ausgegebene modulierte Trägersignal beim Einschalten zu dem zweiten Audioausgangsanschluss (14) zurückgeschleift wird, wobei die Versorgungsspannung veranlasst, dass der Prüfadapter (2; 10) die Schleife zwischen dem dritten und dem vierten Anschluss (11, 12) öffnet.

7. Gerät (1), das einen ersten (13) und einen zweiten (14) Audioausgangsanschluss zum Ausgeben eines Stereosignals umfasst, wobei das Gerät in einer Prüfbetriebsart betreibbar ist, die durch einen externen Computer (3) gesteuert wird, wenn es über den ersten und den zweiten Audioausgangsanschluss mit dem Gerät gekoppelt ist, wobei das Gerät ferner umfasst:
einen Oszillator (25) und einen Modulator, die mit dem ersten Audioausgangsanschluss (13) gekoppelt sind, um ein moduliertes Trägersignal für eine Sendung digitaler Prüfsignale über den ersten Audioanschluss (13) an den Steuercomputer (3) zu erzeugen, wobei das modulierte Trägersignal eine Trägerfrequenz oberhalb 20 kHz besitzt, und einen Demodulator (21, 22), der mit dem zweiten Audioausgangsanschluss (14) gekoppelt ist, um von dem Steuercomputer (3) ein moduliertes Trägersignal zu empfangen und um das empfangene modulierte Trägersignal in serielle digitale Signale zur Prüfung des Geräts (1) zu demodulieren, wobei das Gerät dafür ausgelegt ist, beim Einschalten das modulierte Trägersignal des Modulators über den ersten Audioausgangsanschluss (13) auszugeben und durch einen Detektor (21) des Demodulators (21, 22) zu detektieren, ob das ausgegebene Trägersignal zu dem zweiten Audioausgangsanschluss (14) zurückgeschleift wird,
und wobei das Gerät beim Detektieren, dass das ausgegebene Trägersignal zu dem zweiten Audioausgangsanschluss (14) zurückgeschleift wird, in eine Prüfbetriebsart für einen Betrieb mit dem Steuercomputer (3) geschaltet wird.

8. Gerät nach Anspruch 7, das ferner ein Tiefpassfilter (36) und ein Hochpassfilter (26) zum Kombinieren der erzeugten modulierten Trägersignale mit analogen Audiosignalen zum Ausgeben über den ersten Audioausgangsanschluss (13) umfasst und ein Tiefpassfilter (35) und ein Hochpassfilter (20) zum Trennen der empfangenen modulierten Trägersignale und zum Ausgeben analoger Audiosignale, die an dem zweiten Audioausgangsanschluss (14) vorhanden sind, umfasst.

9. Gerät nach Anspruch 7 oder 8, das ferner einen Gleichstrom-Sperrkondensator (34), der mit dem ersten Audioausgangsanschluss (13) gekoppelt ist, und einen Schalter (43), der dafür ausgelegt ist, den Gleichstrom-Sperrkondensator zu umgehen, wenn beim Einschalten detektiert wird, dass das modulierte Trägersignal zu dem zweiten Audioausgangsanschluss (14) zurückgeschleift wird, um eine Versorgungsspannung für einen mit dem ersten (13) und mit dem zweiten (14) Audioausgangsanschluss verbundenen Prüfadapter (2; 10) bereitzustellen, umfasst.

10. Gerät nach einem der Ansprüche 7-9, wobei das Gerät eine Set-Top-Box zum Empfangen digitaler und/oder analoger Fernsehprogramme oder ein Videorekorder ist.

## Revendications

1. Procédé permettant de tester un appareil (1) comprenant un port de sortie stéréo composé d'un premier (13) et d'un second (14) port de sortie audio, au moyen d'un ordinateur de commande (3) couplé audit port de sortie stéréo, le procédé comprenant :
un démodulateur (21, 22) présent dans l'appareil et couplé au second port de sortie audio (14) pour permettre la réception d'un signal porteur modulé en provenance de l'ordinateur de commande (3) et la démodulation du signal porteur reçu en signaux numériques série afin de tester l'appareil (1) ;
un oscillateur (25) et un modulateur présents dans l'appareil et couplés au premier port de sortie audio (13) pour permettre la génération d'un signal porteur modulé, en vue de transmettre les signaux de test numériques par l'intermédiaire du premier port de sortie audio (13) à l'ordinateur de commande (3), le signal porteur modulé ayant une fréquence porteuse supérieure à 20 kHz ;
lorsque l'appareil (1) est mis sous tension, le signal porteur modulé du modulateur est produit via le premier port de sortie audio (13), et un détecteur (21) du démodulateur (21, 22) détecte le rebouclage ou l'absence de rebouclage dudit signal porteur produit vers le second port audio (14) ;
en cas de détection d'un rebouclage du signal porteur produit vers le second port de sortie audio (14), l'appareil (1) bascule en mode de test pour un fonctionnement avec l'ordinateur de commande (3).

2. Procédé selon la revendication 1, dans lequel la fréquence porteuse se situe dans la plage comprise entre 100 kHz et 20 MHz.

3. Procédé selon la revendication 1 ou 2, comprenant la modulation du signal porteur par les signaux de test numériques en fonction d'un mode d'activation/de désactivation.

4. Procédé selon la revendication 1, 2 ou 3, comprenant l'étape de fourniture d'un adaptateur (2 ; 10) à des fins de test, constitué d'un premier port (11, 12) pour le raccordement au port de sortie stéréo (13, 14) de l'appareil (1), d'un second port (17) pour le raccordement à l'ordinateur de commande (3) et d'un oscillateur (19) pour la modulation des signaux numériques en provenance de l'ordinateur de commande (3) sur une fréquence porteuse supérieure à 20 kHz.

5. Procédé selon l'une des revendications précédentes, dans lequel, si ledit signal porteur n'est pas détecté par le détecteur (21) lors de la mise sous tension, le signal porteur modulé du modulateur est coupé et l'appareil passe en mode de fonctionnement normal.

6. Procédé selon la revendication 5, dans lequel, si le signal porteur modulé produit est détecté pour un rebouclage vers le second port de sortie audio (14) lors de ladite mise sous tension, l'appareil (1) contourne (43) un condensateur de blocage CC (34) existant couplé audit premier port de sortie audio, afin de fournir une tension d'alimentation à un adaptateur de test (2 ; 10) doté d'un premier port (11, 12) constitué des troisième (11) et quatrième (12) ports respectivement connectés auxdits premier (13) et second (14) ports de sortie audio et interconnectés en vue de reboucler le signal porteur produit, la tension d'alimentation entraînant l'ouverture de la boucle entre les troisième et quatrième ports (11, 12) par l'intermédiaire de l'adaptateur de test (2 ; 10).

7. Appareil (1) comprenant un premier (13) et un second (14) port de sortie audio permettant de produire un signal stéréo, l'appareil pouvant fonctionner en mode de test commandé par un ordinateur externe (3), lorsque celui-ci est couplé audit appareil par l'intermédiaire desdits premier et second ports de sortie audio, l'appareil comprenant en outre :
un oscillateur (25) et un modulateur couplés au premier port de sortie audio (13) pour permettre la génération d'un signal porteur modulé, en vue de transmettre les signaux de test numériques par l'intermédiaire du premier port audio (13) à l'ordinateur de commande (3), le signal porteur modulé ayant une fréquence porteuse supérieure à 20 kHz ;
et un démodulateur (21, 22) couplé au second port de sortie audio (14) pour permettre la réception d'un signal porteur modulé en provenance de l'ordinateur de commande (3) et la démodulation du signal porteur modulé reçu en signaux numériques série afin de tester l'appareil (1) ;
l'appareil est agencé de manière à pouvoir, lors de la mise sous tension, produire le signal porteur modulé du modulateur via le premier port de sortie audio (13), et détecter, par le biais d'un détecteur (21) du démodulateur (21, 22), le rebouclage ou l'absence de rebouclage dudit signal porteur produit vers le second port de sortie audio (14) ;
en cas de détection d'un rebouclage du signal porteur produit vers le second port de sortie audio (14), l'appareil bascule en mode de test pour un fonctionnement avec l'ordinateur de commande (3).

8. Appareil selon la revendication 7, comprenant en outre des filtres passe-bas (36) et passe-haut (26) permettant de combiner les signaux porteurs modulés générés avec les signaux audio analogiques pour une production via le premier port de sortie audio (13), ainsi que des filtres passe-bas (35) et passe-haut (20) permettant de séparer les signaux porteurs modulés reçus et les signaux audio analogiques produits présents au niveau du second port de sortie audio (14).

9. Appareil selon la revendication 7 ou 8, comprenant en outre un condensateur de blocage CC (34) couplé au premier port de sortie audio (13) et un commutateur (43) agencé de manière à contourner le condensateur de blocage CC si, lors de ladite mise sous tension, le signal porteur modulé est détecté pour un rebouclage vers le second port de sortie audio (14), en vue de fournir une tension d'alimentation à un adaptateur de test (2 ; 10) connecté auxdits premier (13) et second (14) ports de sortie audio.

10. Appareil selon l'une des revendications 7 à 9, l'appareil étant un boîtier décodeur permettant de recevoir des programmes de télévision numériques et/ou analogiques ou un enregistreur vidéo.
